Europäisches Patentamt

(19) European Patent Office

Office européen des brevets

(11) Publication number: **0 102 172**
**A2**

(12) **EUROPEAN PATENT APPLICATION**

(21) Application number: **83304182.5**

(22) Date of filing: **19.07.83**

(51) Int. Cl.³: **G 03 B 17/12**

(30) Priority: **28.07.82 GB 8221807**

(43) Date of publication of application:
**07.03.84 Bulletin 84/10**

(84) Designated Contracting States:
**AT BE CH DE FR GB IT LI LU NL SE**

(71) Applicant: **STAR SERVICES (ISLE OF MAN) LIMITED**
**Bernera Brookfield Crescent**
**Ramsey Isle of Man(GB)**

(72) Inventor: **Eades, Wilfrid George**
**5 Frampton Court**
**Cheltenham Court, Acton W3(GB)**

(74) Representative: **Daley, Michael John et al,**
**F.J. CLEVELAND & COMPANY 40/43 Chancery Lane**
**London, WC2A 1JQ(GB)**

(54) **Supplementary lighting device for a camera.**

(57) A supplementary lighting device for a camera comprises a plate 3 illuminated through the side edges 9 by light pipes 10 from a lighting box 11. The plate 3 is placed in front of or behind the camera lens. The evenly illuminated plate serves as a filter imposing light as the medium on which the image is developed.

FIG.1

Croydon Printing Company Ltd.

EP 0 102 172 A2

- 1 -

## DESCRIPTION

## "Supplementary Lighting Device for a Camera"

This invention relates to a lighting device
primarily intended for partially exposing a camera
film whilst the film is being exposed to an objective through the camera lens system.  The invention
is also, however, applicable in principle to television and video applications wherein the image is
developed electronically.  The word "camera" in
this specification is accordingly used to cover not only photographic cameras wherein a chemically sensitised film is exposed but also television and video cameras. The word "camera" also embraces optically analogous instruments such as enlargers or the like. Any instrument which brings objects to a focus through a lens is envisaged.

According to the present invention a supplementary lighting device for a camera comprises a transparent body to be interposed between the objective, i.e. the object or scene, being photographed and the film, either behind or in front of the camera lens system. The body is illuminated from the side thereby providing the luminous energy partially to expose the camera film or analogous medium. The body does not however impose an image of its own.

The invention is most conveniently realised by having the body in the form of a plate-like element with edge surfaces through which the light is introduced. Although a lenticular form of body or plate is not excluded a flat sided generally parallelepipedal·plate is preferred. Indeed a part of the optical system of the camera such as an objective or other lens could constitute the body and be illuminated.

The light may conveniently be introduced through light guides based on optical fibres and means are preferably provided to vary the colour of the light and to adjust the luminous intensity. Thus coloured filters and adjustable shutters may be included in a lighting source connected to the body through optical fibre light guides.

The invention further provides a camera including a lens system and a lighting device of the kind described above positioned either in front of or behind the lens system. It may be mechanically more convenient to place the body in front of the lens.

Particular embodiments of the invention will now be described by way of example and with reference to the accompanying drawings wherein:-

Figure 1 illustrates a photographic film camera and supplementary lighting device in accordance with the invention;

Figure 2 is a side section view illustrating certain parts omitted and not visible in Figure 1;

Figure 3 is a diagrammatic view of the illuminated plate part of the supplementary lighting device, and

Figure 4 is a schematic view of an alternative supplementary lighting device.

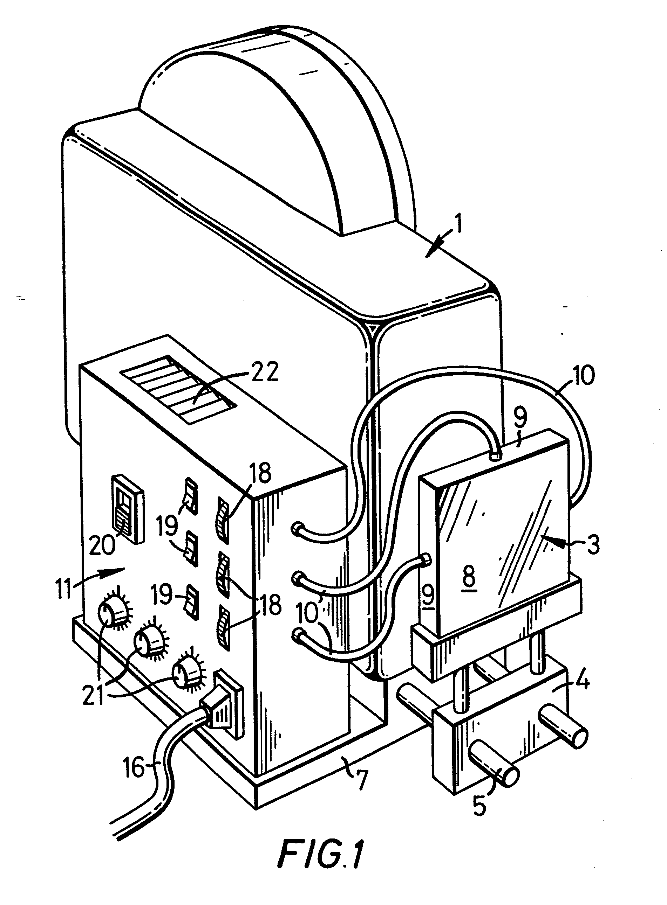

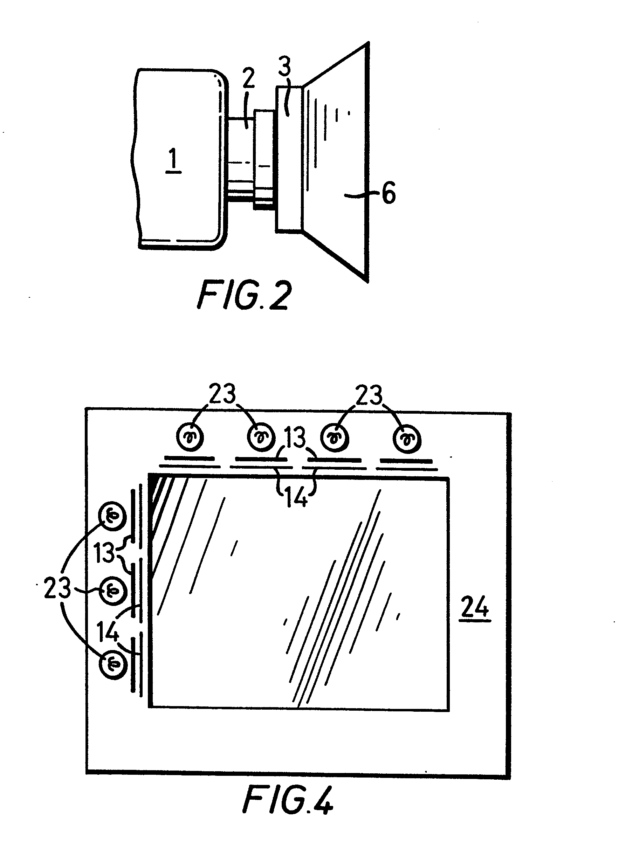

Referring initially to Figure 1 of the drawings the camera illustrated therein comprises a housing 1 carrying the film and the various working parts of the camera which form no part of the present invention. An objective lens 2, seen in Figure 2 is detachably mounted on the front of the housing 1. A transparent glass illuminatable plate 3 supported by a base 4 is slidable towards and away from housing 1 on rods 5 protruding frontwardly from the camera mounting plate 7. A matte box 6 (see Figure 2) is positioned in front of plate 3 as a lens hood. The plate 3 is rectangular in form with sides 8 typically from 1 to 30 mm thick and from 6 cm to 20 cm in length. The thinner the plate the lighter and more convenient to use. However there must be sufficient thickness to provide internal reflection for illumination. There are flat front and rear faces 8 at right angles to the camera axis and flat edge surfaces 9. A light-conducting flexible cable 10 connects each edge surface 9 to the illuminated interior of a lighting box 11 on plate 7. Each cable 10 contains a longitudinally extending array of thin glass fibres, termed optical fibres, and an outer opaque flexible sheath.

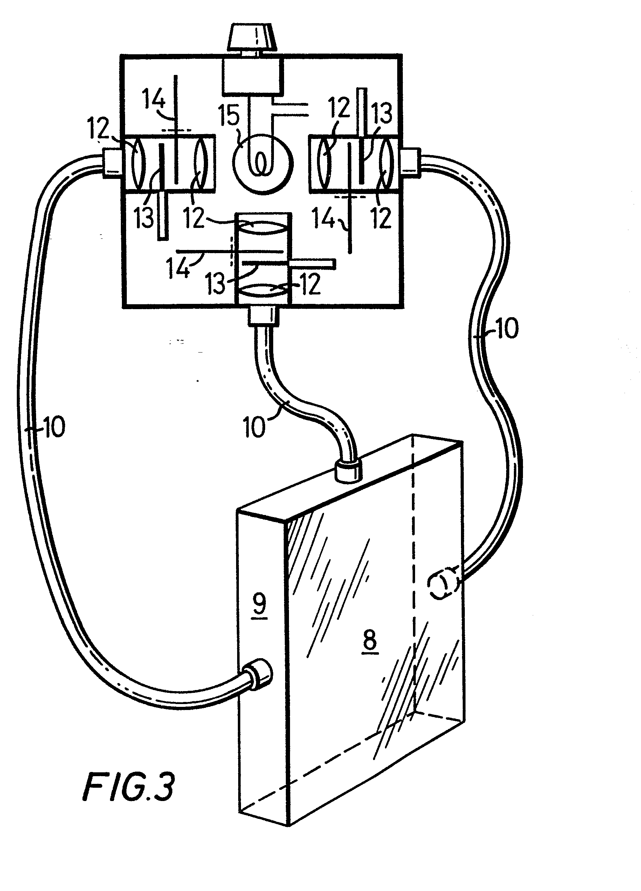

The construction and operation of the lighting box 11 can be appreciated by considering, as well as Figure 1, Figure 3 of the drawings. The inner end of each cable 10 is open to the front of an optical sub-assembly of lenses 12 with interposed retractable shutter 13 and variable colour filter 14, illustrated as rotatable but reciprocable arrangements may be preferred. Light bulbs 15, one only illustrated in Figure 3 are provided behind each optical sub-assembly. At the outside of the box 11 there is a power cable 16 for the lights and other automatic controls. For each optical sub-assembly there is a rotatable knob 18 for the filter and a switch 19 for manual shutter operation. A master switch 20 for automatic shutter operation is also provided. On-off dimmer switches 21 are provided one for each electric light source. The box 11 has a vent 22. All these switches and controls could be remote.

In use of the device in order partially to

0102172

- 5 -

expose a film being normally exposed to an objective the absolute and relative luminous intensities through the cables are controlled by the illuminating source and the shutters, whilst the colour of the light being fed to the plate 3 is adjusted by the filters. The plate thus takes on a substantially uniform and controlled luminous intensity of a chosen colour.

The colour may be incorporated into the plate by the use of coloured glass instead of or in addition to the filters 13. The edge surfaces 9 may be reflective to enhance utilisation of light energy and the main faces may be partially mirrored to this end.

In the alternative embodiment of Figure 4 individual light sources 23, each with its associated shutter 13 and filter 15 are positioned in a frame structure 24 around and immediately adjacent the plate 8.

Previously proposed lighting devices for these purposes have directed light from an external source into the field of view of the camera lens. This has resulted in bulky arrangements and inherent optical defects. In the present invention the illumination is arranged and positioned immediately in front of the medium to be exposed and at right angles to the camera axis. The illuminated plate 8 could be regarded as a filter functioning to impose light on the medium on which the image is developed.

## CLAIMS

1. A lighting device for causing light to fall on a medium which is producing an image of a viewed objective, such device comprising a transparent body to be interposed between the medium and the objective and means for illuminating the body from the side.

2. A device as claimed in Claim 1 wherein the body is a flat-faced plate with edge surfaces and light is led into the plate through the said edge surfaces.

3. A device as claimed in Claim 2 including a source, remote from the plate, of light of chosen intensity and colour and an optical fibre cable connecting the source to one or a plurality of positions on the plate edge surfaces.

4. A device as claimed in Claim 2 wherein individual light sources are positioned around the plate edge surfaces.

5. A camera including a device as claimed in any of the preceding claims positioned in front of or behind the objective lens.

FIG.1

FIG.2

FIG.4

FIG.3